Europäisches Patentamt

European Patent Office

Office européen des brevets

(11) Publication number: **0 149 603**
**B1**

(12) **EUROPEAN PATENT SPECIFICATION**

(45) Date of publication of patent specification: **17.05.89**

(51) Int. Cl.⁴: **B 63 B 1/38**

(21) Application number: **83902705.9**

(22) Date of filing: **11.07.83**

(86) International application number:
**PCT/US83/01067**

(87) International publication number:
**WO 85/00332 31.01.85 Gazette 85/03**

(54) FLEXIBLE BOW SEAL AIR RIDE BOAT HULL.

<table>
<tr><td>

(43) Date of publication of application:
**31.07.85 Bulletin 85/31**

(45) Publication of the grant of the patent:
**17.05.89 Bulletin 89/20**

(84) Designated Contracting States:
**DE FR GB NL SE**

(56) References cited:
**US-A-2 005 473**
**US-A-3 146 752**
**US-A-3 331 347**
**US-A-3 473 503**
**US-A-3 476 069**
**US-A-3 702 598**
**US-A-3 726 246**
**US-A-3 742 888**
**US-A-4 046 217**

**No relevant documents have been disclosed**

</td><td>

(73) Proprietor: **Burg, Donald E.**
**15840 S.W. 84th Avenue**
**Miami Florida 33157 (US)**

(73) Proprietor: **Burg, Paulette Renee**
**15840 S.W. 84th Avenue**
**Miami, Florida 33157 (US)**

(73) Proprietor: **Burg, Sheri Renee**
**15840 S.W. 84th Avenue**
**Miami, Florida 33157 (US)**

(73) Proprietor: **Burg, Daniel Earl**
**15840 S.W. 84th Avenue**
**Miami, Florida 33157 (US)**

(73) Proprietor: **Burg, Nicole Renee**
**15840 S.W. 84th Avenue**
**Miami, Florida 33157 (US)**

(72) Inventor: **Burg, Donald E.**
**15840 S.W. 84th Avenue**
**Miami, Florida 33157 (US)**

(74) Representative: **Baillie, Iain Cameron et al**
**c/o Ladas & Parry Isartorplatz 5**
**D-8000 München 2 (DE)**

</td></tr>
</table>

Courier Press, Leamington Spa, England.

## Description

This invention relates to the field of marine surface vessels supported at least in part by gas trapped beneath the hulls.

Even though the idea of introducing air or other gases at ambient or higher pressures under boat hulls is not new in basic concept, only a few of the more sophisticated developments have met with any commercial success. However, in general the prior boat hulls have been too expensive or impractical for general marine application. The only example of the foregoing that is believed to have any applicability is the Surface Effect Ship (SES) as it is known in the United States. The SES is an outgrowth of the success of the Ground Effect Machine (GEM) as first made workable by Christopher Cockerell over two decades ago in England. The GEM is totally supported by an air cushion and has seals round its full periphery, and as such it is truly amphibious and has little relationship to this invention.

The SES (See U.S.-A-4,046,217 and U.S.-A-3,476,069) is a marine vehicle with catamaran sidehulls (corresponding to the preamble of claim 1) connected by a high, wide, cross structure at the top sides and by large flexible seals fore and aft. The SES offers superior ride qualities since the flexible seals yield resiliently to passing waves. However, because of the flexibility of the seals, and a generally flat undersurface, the hull cross structure is designed with a high wave clearing undercarriage. As a result, hull stresses can be very high and a highly stressed heavy hull cross structure is necessary. This is also aggravated by the fact that the SES must be much wider than the conventional hull or the Air Ride hull for stability purposes because of the SES's higher center of gravity (CG). As a result, even though the SES is very efficient, it compromises much of that advantage to expensive dead structure weight. A 33.5 meter (110 foot) SES would have an undercarriage clearance of about 1.83 to 2.44 meters (about six to eight feet) and requires some 12.19 meters (forty feet) beam for stability. A similar 33.5 meter vessel made according to the present invention may have an average chamber depth of as little as 45.7 cm. (about eighteen inches) and a required beam of only 8.53 meters (twenty-eight feet). The reason that the present invention requires so much less beam is because its deck load as little as 1.52 to 2.44 meters (five to eight feet) above the water compared to approximately 3.66 to 4.57 meters (approximately twelve to fifteen feet) for the SES because of the high wave clearing undercarriage made necessary by the form of the SES's structure. However, due to its superior ride quality, very high speed capability, and high efficiency, the SES has received attention for naval and commercial application.

The boat hulls of U.S.-A-4,046,217 and U.S. -A-3,476,069 use flap-like or flexible seal members in the aft portion of the vessel, have a deep wave clearing undercarriage which utilizes much valuable hull space, have deep static draft requirements, require very wide beams for stability because of high CG characteristics, have inherently high stress hull structures that are heavy and expensive to manufacture and cannot readily locate propellers under the aft flexible seal members due to vertical movement of the seals. Additionally, the flap-like flexible seals are heavy and expensive due to their large size and easy removal of the seals for replacement or maintenance by on-board personnel while the SES remains in the water is virtually impossible.

Additionally, U.S.-A-3,476,069 has sidehulls positioned well toward the rear of the craft and a flexible skirt positioned around the front of the craft with most of such flexible skirt extending very far forward of the sidehulls. This makes for a tricycle-like support arrangement with the air chamber center of lift well forward of the centers of lift of the sidehulls. The result is a craft that is dynamically unstable if the chamber air pressure is lost so the inventors have provided for a fixed structure center bow to be located forward of the sidehulls with such bow intended to add a forward point of support in the event of loss of air chamber pressure. The instant invention does not require center bows forward of mid-ship to be effective with or without the air chamber pressurized and forward of mid-ship center bow(s), if used, have at least a majority of their structure located between the sidehulls. U.S.-A-3,476,069 also says that the sidehulls may be used in toe-in or toe-out manner if necessary.

With the foregoing in mind it is the principal object of the present invention to provide a marine surface vessel with extraordinarily smooth ride qualities and significant load-carrying, efficiency and speed improvements compared to conventional hulls while also maintaining low stress and therefore low cost hull structure, shallow draft, flexibility of propulser location, narrower beam, and much more useful hull space when compared to the SES type craft.

The present invention provides an improved boat hull containing a vertical centerline plane and that is partially supported by a pressurized gas lifting surface including a recess in an underside of the hull defined by catamaran-like sidehulls constituting a lower portion of the hull and having keels that diverge in the aft direction, and at least one aft bow member between the sidewalls occupying a majority of the recess width; a gas sealing forward flexible member, said recess being supplied with pressurized gas from a powered gas supply source through a gas inlet in fluid communication with said recess, characterized by said sidehulls extending approximately the full length of the hull, said keels diverging to enlarge the recess width by at least twenty percent aft of their forward water contacting portions that are proximal a lowermost water contacting portion of said forward flexible seal member, substantially rigid water contacting elements of said sidehulls extending substantially from proximal said forward flexible seal member lower water contacting portions to a vertical transverse plane located proximal a lower portion of said at least one aft bow member, said at least one aft bow member being substantially rigid and at least partially containing angled surfaces, with said angled surfaces viewed in said vertical transverse plane, that in total comprise at least twenty-five percent (25%) of recess width, and said angles of said surfaces, when viewed in hull vertical transverse planes, being between five (5) and fifty (50) degrees with a horizontal line with said horizontal line defined as a line perpendicular to the vertical centerline plane of the hull.

The flexible seal member at the front of the vessel absorbs much of the initial wave impact thereby contributing substantially to the exceptional ride quality, along with efficiency and speed. The aft bow member or bow members and optional intermediate bow sections ride in the water like small bow sections thereby improving hull ride and handling characteristics and reducing gas leakage. The bow shaped members along with the catamaran-like sidehulls provide gas restraining means, sure tracking and turning characteristics when underway in any type of sea, and proper hull attitude and trim without wallowing at low speeds or yaw, roll or pitch instabilities at high speeds even if the pressurized gas supply is wholly or partially inoperative.

The bow shaped members not only act as gas flow restrictors, but also add substantially to hull structural integrity and seaworthiness. In the design of the more desirable longer finer hull shapes it is advantageous to locate several bow shaped members athwartships of and interspaced down the length of the recess that impacts with the irregular water surface during rough sea operation. This maintains a series of gas chambers down the length of the hull, that may be interconnected and/or individually pressurized, and minimized water impact with the underside of the rather shallow recess itself. The bow shaped members are downwardly extending and may have any shape such as inverted-V, V, rounded, W, flat or the like, with the inverted-V being a preferred embodiment because of its simplicity of construction, inherently strong structural characteristics, and good ride qualities.

The forward flexible seal would normally be fabricated from vinyl coated flexible materials although other seal materials and designs are considered within the scope of the invention. Seal designs can include rigid material portions joined by flexible materials, combined or overlapping rigid material sections that result in an overall flexing effect, and the like. In its preferred embodiment pressurized gas is impacted onto the back side of the seal to help seal shape recovery while traversing rough seas. This seal is intended to be easily removable for replacement or repair by removing a series of bolts, plates or the like that can be reached by on-board personnel while the boat remains in the water.

The use of diverging keels on the catamaran sidehulls has proven to be very effective and valuable on Air Ride test craft and is the preferred embodiment for this flexible bow seal Air Ride inventive hull also. As an example, on the 12.8 meter (42 foot) Air Ride test craft the catamaran sidehull keels are some 1.83 meters (six feet) apart at the forward end of the recess and 3.66 meters (twelve feet) apart aft. This means less gas flow leakage forward and narrower or finer entry forward which contribute to the exceptional ride qualities of these craft. The amount of sidehull keel divergence need not be large to provide noticeable improvements and twenty percent is considered sufficient while fifty percent divergence offers truly superior performance.

The catamaran sidehulls employ non-trip chines in their preferred embodiment that aid stability in turns. The 12.8 meter Air Ride test craft can negotiate a full 180° turn in less than a 60.96 meters (200 foot) radius while traveling at an estimated 4-/22 km./hr. (25 mph). Banking characteristics in a turn are similar to a conventional semi-V hull with the outboard chine higher than the inboard chine. The use of non-trip chines on the catamaran sidehulls contributed to these good handling characteristics.

In the case of the sidehulls, aft seals, and any additional bow members disposed proximal the recess it is generally considered, for the present invention, that 50 degrees is an upper limit for good planing efficiencies and that 5 degrees is a lower limit that still has reasonable rough water ride qualities. With reference to Page 117, Figure 91 of High Speed Small Craft, Third Edition by Peter DuCane, Temple Press Books Limited, London, 1964, this can be illustrated. That figure titled "Boundary of planing of flat-bottomed planing surfaces" shows that a deadrise angle of 50 degrees has planing efficiencies of 45 percent while, for example, 70 degrees has only 20 percent. Planing efficiencies, as presented in the reference by DuCane, are over 90 percent for the 5 degree surface. Therefore, the range of angles, 5 to 50 degrees, results in good planing lift efficiencies, reasonably good to excellent ride qualities, and generally at least partial water contact to reduce gas flow leakage (Note that deadrise angle is the angle that a bottom surface of the hull, as measured in a vertical transverse plane of the hull, forms with a line perpendicular to the vertical centerline plane of the hull).

It is interesting to note that the wide essentially horizontal lower surfaces of the aft seals and SES's and other prior art normally ride above the water surface by some distance, some 0.46 meters (one and one half feet) or so is the design goal for a future 3000 ton Navy SES, which at least partially accounts for the high air flow rate requirement of these craft and other partially air supported craft that utilize basically horizontal aft seal surfaces.

The angled portions of the aft bow member of the present invention need not span the full width of the bow member as the critical impact areas are normally at or near the water contacting portions. Therefore, with the 5-50 degree angled surface limitation, it can be stated that an aft bow member that is angled over at least 25 percent of the recess width would be acceptable (Note that "average recess width" as herein defined is the width between recess boundary waterlines on boat structure averaged over recess length. If there are any breaks in the recess boundary waterline, such as might be caused by a hole or vent in a sidehull or bow member at the waterline, the waterline is considered to be on a straight line between the waterlines on boat structure either side of said break in the recess boundary waterline). Since the aft or any additional bow members can be composed of one or more bow members that can be staggered slightly fore and aft, as well as side to side, it is necessary to define a means of measuring the bow member surface angles. These angles are measured in one or more vertical transverse planes of the hull that intersect the bow members and do not overlap each other across any longitudinal vertical plane parallel to the vertical centerline plane of the hull. Therefore, these vertical transverse planes may be staggered, but their total width shall not exceed the maximum outside width of the bow members.

The invention will be better understood upon reference to the drawings and detailed description of the invention which follow in which:

Figure 1 is a side elevation of a boat hull built according to the present invention showing the catamaran keel, outer chine, and non-trip chine.

Figure 2 is a bottom view of a boat hull built with the invention and showing the recess, the catamaran-like load-carrying side hulls, diverging side hull keels, aft and intermediate inverted-V bow members, flexible seal in the bow, inlet ports, and dynamic calm sea waterline.

Figure 3 is a centerline cross section of the hull of Figure 2 showing a gas pressurizing means in relation to the recess, flexible forward seal and flexible seal pressurization means, aft and intermediate inverted-V bow members, and flexible seal removing means.

Figure 4 is a partial cross section taken along the line 4-4 of Figure 2 showing the catamaran keel and outer chine.

Figure 5 is a partial cross section taken along the line 5-5 of Figure 2 showing the catamaran keel, non-trip, and outer chine.

Figure 6 is a partial cross section taken along the line 6-6 of Figure 2.

Figure 7 is a partial front and/or bow elevation of the starboard side of the invention showing the flexible seal and flexible seal removable means, catamaran side hull, outer and non-trip chine.

Figure 8 is a partial rear or stern elevation of the starboard side of the invention.

Figure 9 is a partial bottom view of several alternative embodiments of the hull of Figure 2 including V-shaped bow members, one with gas passageway and stepped diverging catamaran side hull keels.

Figure 10 is a partial cross section taken along the line 10-10 of Figure 9.

Figure 11 is a partial cross section taken along the line 11-11 of Figure 9 showing the catamaran side hull keel and V-shaped bow member with integral gas passageway.

Figure 12 is a partial cross section taken along the line 12-12 of Figure 9.

With reference to each of the aforementioned Figures in turn, and using like numerals to designate similar parts throughout the several views, a preferred embodiment and several alternative embodiments will now be described.

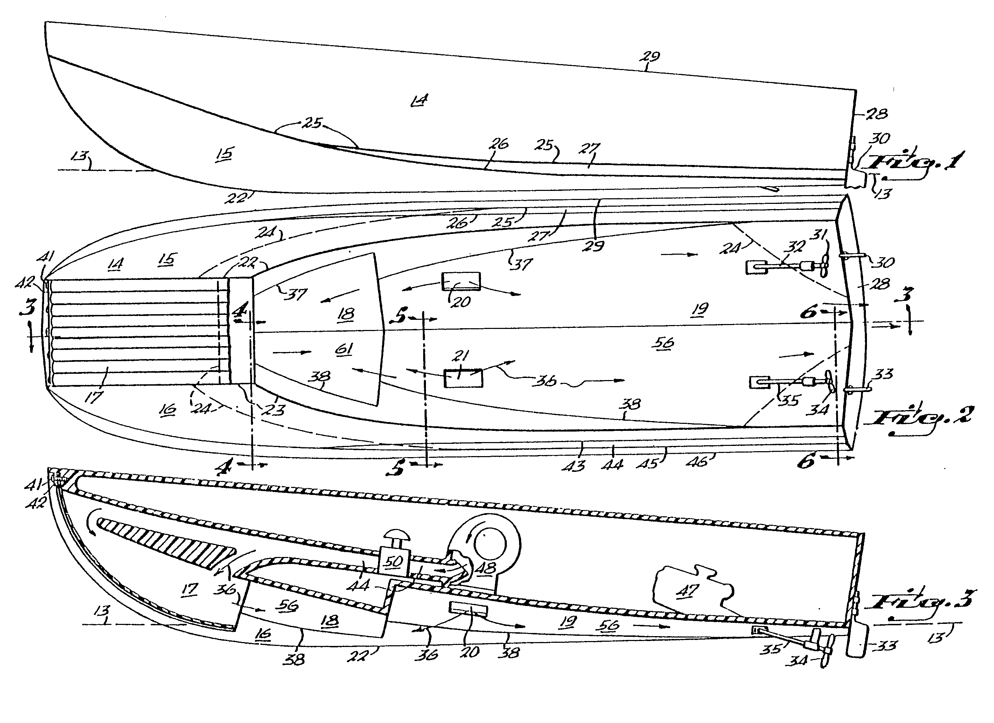

Figure 1 discloses a motorboat with the inventive hull 14 in profile view of the port side which illustrates the resemblance to standard hull forms. Some elements of the port load carrying catamaran sidehull 15 includes the port catamaran keel 22, port inner chine 26, port non-trip chine 27, and port outer chine 25. The port hull sheer line 29, transom 28, and dynamic waterline 13 are also shown.

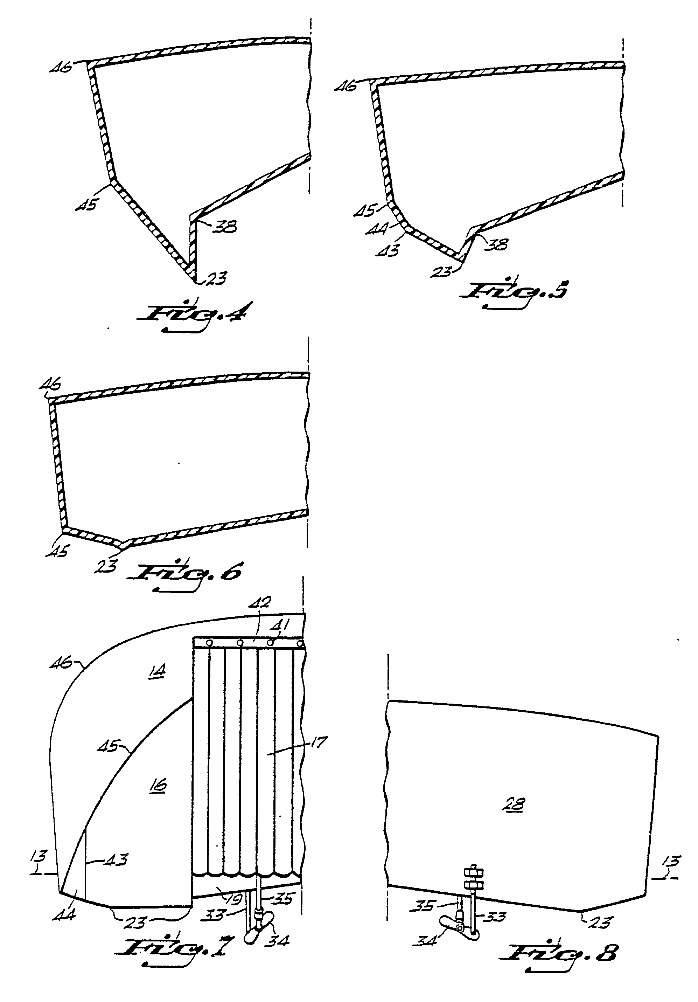

Figure 2 discloses a bottom view of the inventive hull 14. The preferred embodiment of a flexible bow seal 17 includes an easily removable attaching arrangement including such items as attaching bolts 41 and plate 42 or other suitable attachment means that can be removed while the boat is waterborne by on-board personnel. Port 15 and Starboard 16 load-carrying catamaran sidehulls, aft bow shaped member 19, and optional typical secondary bow member 18 define the recess 56. It will be seen from the drawing that the load-carrying catamaran sidehulls begin near or proximal to the bow or forward portion of the hull. Any number of additional bow members such as 18 may be utilized if desired and, further, shapes other than the inverted-V shown are acceptable. It is also considered within the scope of the present invention to have downwardly extending planing steps (not shown) located on the recess side of sidehulls to add to stability. This could be accomplished by removing a center section of an additional bow member 18 for example.

The recess 56 gas supply ports 20 and 21 are shown in a typical arrangement although from one to many ports can be utilized and can be located anywhere in the recess 56. The propulsor underwater gear include drive shafts and supports 32 and 35 that project through the gas recess 56. In this version, subcavitating propellers 31 and 34, and rudders 30 and 33 are shown in typical arrangement, although the Air Ride invention can utilize other propeller types, waterjets and the like if desired and location can be any other suitable location such as under the catamaran sidehulls, aft of the transom, or even on deck in the case of air propulsors.

Other items in Figure 2 include hull intersect lines 37 and 38, sheer lines 29 and 46, outer chines 25 and 45, inner chines 26 and 43, and nontrip chines 27 and 44. Chines such as the aforementioned are not essential to function of the Air Ride invention and other designs such as rounded bilges are feasible. However, hard chine designs embodiment for most applications. Note that the catamaran sidehull keels 22 and 23 diverge at least a portion of the length of the recess 56. Specifically, the side hull keels 22 and 23 diverge to enlarge the recess width by at least twenty percent aft of their water contacting portions that are proximal a lowermost portion of the bow seal 17.

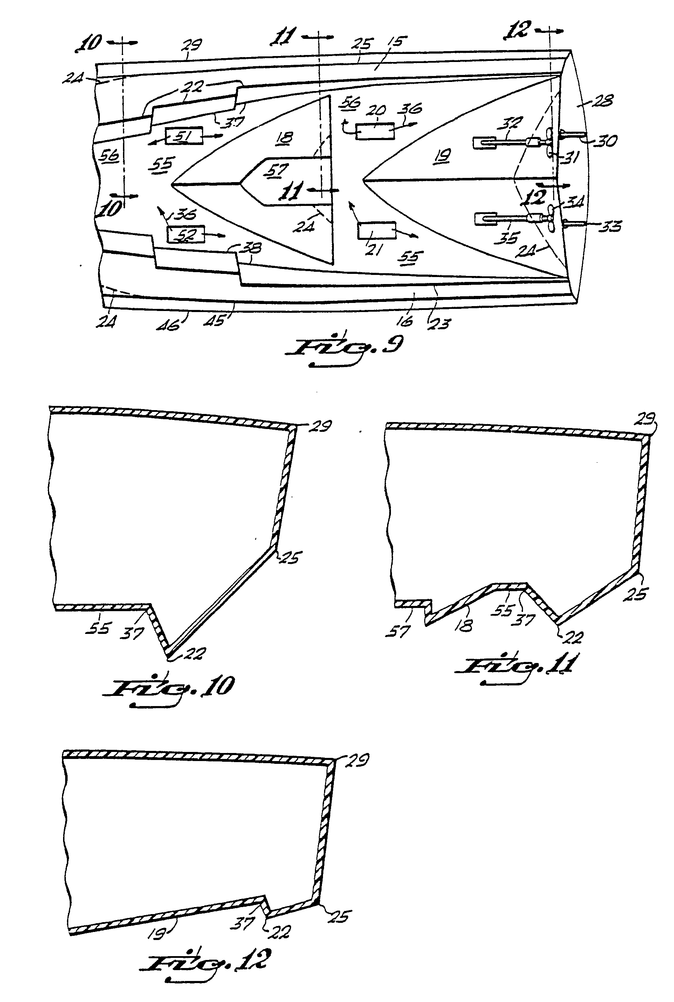

Figure 3 discloses a longitudinal cross section along a hull vertical centerline plane 3-3 of Figure 2. When any gas, such as air, is supplied to the recess 56 through supply ducts or ports such as 20 from any gas supply source or sources at ambient or higher pressures such as from a powered blower 48 in fluid communication therewith, performance improvement results. When at higher than ambient pressures, a hull lift-augmenting force is realized that improves hull lifting capabilities, ride quality, and efficiency. The gas flow arrows 36 show the general direction of gas flow in the recess 56 during dynamic calm sea operation.

The forward flexible seal 17 can be supplied with pressurized gas from a source such as the powered blower 48 through gas ducts 49 with pressure regulated by an optional gas regulating valve 50. This allows variations in firmness of the flexible seal 17 with resultant control of ride quality and flexible seal 17 gas leakage in a seaway. Those features coupled with the preferred embodiment inverted-V downwardly extending bow shaped members 18, 19, result in a cushioned effect to produce an extremely soft ride.

Figure 3 also shows a typical prime mover engine 47. The blower 48 can be powered by its own engine, not shown, or belt, hydraulic, or other drive means off of other engines such as the prime mover engine 47. Drive shaft 35 subcavitating propeller 34 and rudder 33 can also be seen. Flexible seal 17 intersects the dynamic calm water line 13 in this instance and is attached to the hull using bolt 41 and plate 42. Load-carrying catamaran sidehull 16 is shown extending downwardly from hull 14, which can also be seen clearly in cross-sectional view Figure 4 in referring to the keel 23 of the sidehull 16.

Turning now to Figure 4, there is disclosed a partial cross-section taken along the line 4-4 of Figure 2 disclosing sheer line 46, outer chine 45, catamaran sidehull keel 23, and hull line intersect 38. The flexible seal area parallel to each other sidehull inside surfaces are illustrated by a line from 23 to 38.

Figure 5 is also a partial cross-section taken along the line 5-5 of Figure 2 and illustrates sheer line 46, outer chine 45, non-trip chine 44, inner chine 43, catamaran sidehull keel 23, and hull intersect line 38. The inside surfaces of sidehulls, as illustrated by a line 23 to 38, are at least in part comprised of angles, when measured in at least one hull vertical transverse plane proximal the recess, that are between twenty-five and eighty degrees with a line perpendicular to the vertical centerline plane of the hull.

Figure 6 is a similar partial cross-section taken at the stern of the boat along the line 6-6 of Figure 2. It also illustrates the location at that point of sheer line 46, outer chine 45, and the trailing edge of catamaran sidehull keel 23.

Figure 7 is a partial front elevation showing the flexible bow seal member 17, attached to inventive hull 14 by bolt 41 and plate 42. It is generally advisable to have the inside surface of the sidehulls adjacent to the flexible seal 17 parallel to each other to prevent interference with seal movement. The outer chine 45 is shown in relation to starboard load-carrying catamaran sidehull 16, non-trip chine 44, and inner chine 43. Also shown is catamaran sidehull keel 23, dynamic water line 13 and sheer line 46. Beneath flexible seal 17 appears aft bow-shaped member 19, drive shaft 35, subcavitating propeller 34, and rudder 33.

In Figure 8 a partial rear elevation is shown of the starboard side of the craft showing transom 28, dynamic water line 13, catamaran sidehull keel 23, and the conventional elements of drive shaft 35, propeller 34, and rudder 33.

Figure 9 is a partial bottom view showing several alternative embodiments which may be considered as separate alternatives. Shown is an abbreviated form of aft bow member 19 in proximity to drive shaft 32 and 35, propellers 31 and 34, and rudders 30 and 33 mounted on transom 28. Recess 56 is defined by aft bow member 19, load-carrying catamaran sidehulls 15 and 16 and forward portions which are not shown in Figure 9. One of the alternative embodiments shown in Figure 9 is a secondary bow member 18 containing a further optional feature, air passageway 57. The floor of the recess 55 surrounds bow member 18, and bow member 18 and aft member 19 are shown intersecting the dynamic water line 24. In a manner similar to those disclosed in Figure 2, air inlets are shown forward of the aft bow member 20 and 21, and are duplicated forward of the secondary bow member 18 with inlets 51 and 52. The catamaran sidehulls 15 and 16 may alternatively diverge from the vertical center line plane of the inventive hull for at least a portion of their length. A further alternative embodiment shown in Figure 9 is at least one step in the diverging sidehulls as shown at 22. As a result, bow hull intersect lines 37 and 38 are also stepped in the alternative embodiment shown in Figure 10. Of course, sheer lines 29 and 46 and chines 25 and 46 are also shown as in earlier views.

Turning now to Figure 10, which is a partial cross-section taken along the line 10-10 of Figure 9, the sheer line 29, chine 25, catamaran sidehull keel 22, hull intersect line 37 and the floor 55 of recess 56 is shown therein.

In Figure 11, which is partial cross-section taken along the line 11-11 of Figure 10, there is again disclosed sheer line 29, chine 25, catamaran sidehull keel 22, hull intersect line 37, the floor 55 of recess 56, the slope of secondary bow 18, and air passageway 57.

Finally, turning to Figure 12, which is partial cross-section taken at the very rear of the craft along the line 12-12 of Figure 9, there is disclosed hull sheer line 29, chine 25, catamaran sidehull keel 22, hull intersect line 37, and aft bow section 19.

## Claims

1. An improved boat hull (14) containing a vertical centerline plane and that is partially supported by a pressurized gas lifting surface including a recess (56) in an underside of the hull defined by catamaran-like sidehulls (15, 16) constituting a lower portion of the hull (14) and having keels (22, 23) that diverge in the aft direction, and at least one aft bow member (19) between the sidehulls (15, 16) occupying a majority of the recess width; a gas sealing forward flexible member (17), said recess being supplied with pressurized gas from a powered gas supply source (48) through a gas inlet (20, 21) in fluid communication with said recess, characterized by said sidehulls (15, 16) extending approximately the full length of hull (14), said keels (22, 23) diverging to enlarge the recess width by at least twenty percent aft of their forward water contacting portions that are proximal a lowermost water contacting portion of said forward flexible seal member (17), substantially rigid water contacting elements of said sidehulls extending substantially from proximal said forward flexible seal member lower water contacting portions to a vertical transverse plane located proximal a lower portion of said at least one aft bow member (19), said at least one aft bow member being substantially rigid and at least partially containing angled surfaces, with said angled surfaces viewed in said vertical transverse plane, that in total comprise at least twenty-five percent (25%) of recess width, and said angles of said surfaces, when viewed in said hull vertical transverse plane, being between five (5) and fifty (50) degrees with a horizontal line with said horizontal line defined as a line perpendicular to the vertical centerline plane of the hull.

2. The hull of claim 1, characterized in that said sidehulls (15, 16) have inside surfaces that are substantially parallel to each other proximal at least a portion of said forward flexible seal member (17).

3. The hull of claim 1, characterized in that said angled surfaces of said aft bow member (19) as viewed in said vertical transverse plane comprise a major portion of the width of said aft bow member.

4. The hull of claim 1, characterized in that said angled surfaces of said aft bow member (19) are at least in part curvilinear.

5. The hull of claim 1, characterized in that said aft bow member (19) includes a substantially inverted-V shape.

6. The hull of claim 1, characterized in that said aft bow member (19) includes a substantially V-shape.

7. The hull of claim 1, characterized by an additional bow member (18) disposed both proximal the recess and forward of said aft bow member (19).

8. The hull of claim 7, characterized by individual fluid communication of gas pressurizing means (20, 21; 51, 52) with individual portions of the recess.

9. The hull of claim 1, characterized in that said sidehull keels (22, 23) diverge by at least fifty percent (50%) of a distance between them at their forwardmost water contacting portions.

10. The hull of claim 1, characterized in that said sidehull keels (22, 23) are substantially parallel proximal their forwardmost water contacting portions.

11. The hull of claim 1, characterized in that a downwardly extending planing step is disposed proximal a recess side of each sidehull, said steps further extending over only a portion of recess width.

12. The hull of claim 1, characterized by gas sealing structure rearward of said aft bow member.

13. The hull of claim 1, characterized in that the gas sealing forward flexible member (17) is pressurized from a pressurized gas source (48) directly through a pressure regulating device (50).

14. The hull of claim 1, characterized in that sidehull keels (22, 23) diverge in a discontinuous manner to expand a width of the pressurized recess.

## Patentansprüche

1. Verbesserter Schiffskörper (14), der eine vertikale Längsmittellinie enthält und teilweise auf einer druckgasbeaufschlagten Auftriebsfläche abgestützt ist, zu der eine Vertiefung (56) in einer Unterseite des Schiffskörpers gehört, die durch katamaranartige Seitenkörper (15, 16) begrenzt ist, die einen unteren Teil des Schiffskörpers (14) bilden und Kiele (22, 23) besitzen, die nach hinten divergieren, und durch mindestens ein hinten angeordnetes Bugelement (19), das zwischen den Seitenkörpern (15, 16) angeordnet ist und sich über den größten Teil der Breite der Vertiefung erstreckt; ferner mit einem vorn angeordneten flexiblen Gasabdichtelement (17), wobei die Vertiefung mit Druckgas von einer kraftbetätigten Gasquelle (48) über einen Gaseinlaß (20, 21) beschickt wird, der mit der Vertiefung in Strömungsverbindung steht, dadurch gekennzeichnet, daß sich die Seitenkörper (15, 16) annähernd über die ganze Länge des Schiffskörpers (14) erstrecken, daß die Kiele (22, 23) derart divergieren, daß die Breite der Vertiefung hinter den proximal von einem untersten wasserberührenden Teils des vorn angeordneten, flexiblen Abdichtelements (17) angeordneten, vordersten wasserberührenden Teile der Kiele um mindestens 20% zunimmt, daß sich im wesentlichen starre wasserberührende Elemente der Seitenkörper im wesentlichen von einer proximal von den unteren wasserberührenden Teilen des vorn angeordneten, flexiblen Abdichtelements proximal liegenden Stelle bis zu einer vertikalen Querebene erstrecken, die proximal von einem unteren Teil des mindestens einen hinten angeordneten Bugelements (19) angeordnet ist, daß das mindestens eine hinten angeordnete Bugelement im wesentlichen starr ist und mindestens teilweise von Schrägflächen begrenzt ist, die bei Betrachtung in der vertikalen Querebene teilweise schräg liegen und sich über mindestens 25% der Breite der Vertiefung erstrecken, und daß bei Betrachtung in der vertikalen Querebene des Schiffskörpers die Winkel zwischen den genannten Flächen und einer zu der vertikalen Längsmittellinie des Schiffskörpers rechtwinkligen, horizontalen Linie fünf (5) bis fünfzig (50) Grad betragen.

2. Schiffskörper nach Anspruch 1, dadurch gekennzeichnet, daß die Seitenkörper (15, 16) Innenflächen haben, die proximal von mindestens einem Teil des vorn angeordneten flexiblen Abdichtelements (17) zueinander parallel sind.

3. Schiffskörper nach Anspruch 1, dadurch gekennzeichnet, daß die Schrägflächen des hinten angeordneten Bugelements (19) bei Betrachtung in der vertikalen Querebene sich über den größten Teil der Breite des hinten angeordneten Bugelements erstrecken.

4. Schiffskörper nach Anspruch 1, dadurch gekennzeichnet, daß die Schrägflächen des hinten angeordneten Bugelements (19) mindestens teilweise gekrümmt sind.

5. Schiffskörper nach Anspruch 1, dadurch gekennzeichnet, daß das hinten angeordnete Bugelement (19) im wesentlichen ein umgekehrtes V bildet.

6. Schiffskörper nach Anspruch 1, dadurch gekennzeichnet, daß das hinten angeordnete Bugelement (19) im wesentlichen V-förmig ist.

7. Schiffskörper nach Anspruch 1, gekennzeichnet durch ein zusätzliches bugelement (18), das proximal von der Vertiefung und vor dem hinten angeordneten Bugelement (19) angeordnet ist.

8. Schiffskörper nach Anspruch 7, dadurch gekennzeichnet, daß Gasdruckerzeugungsmittel (20, 21; 51, 52) einzeln mit je einem Teil der Vertiefung in Strömungsverbindung stehen.

9. Schiffskörper nach Anspruch 1, dadurch gekennzeichnet, daß die Seitenkörperkiele (22, 23) um mindestens fünfzig Prozent (50%) des Abstandes divergieren, der zwischen ihnen an ihren vordersten wasserberührenden Teilen vorhanden ist.

10. Schiffskörper nach Anspruch 1, dadurch gekennzeichnet, daß die Seitenkörperkiele (22, 23) proximal von ihren vordersten wasserberührenden Teilen im wesentlichen parallel sind.

11. Schiffskörper nach Anspruch 1, dadurch gekennzeichnet, daß proximal von einer vertiefungsseitigen Seite jedes Seitenkörpers eine abwärtsgerichtete Gleitstufe angeordnet ist und diese Stufen sich nur über einen Teil der Breite der Vertiefung erstrecken.

12. Schiffskörper nach Anspruch 1, gekennzeichnet durch eine hinter dem hinten angeordneten Bug vorgesehene Gasabdichteinrichtung.

13. Schiffskörper nach Anspruch 1, dadurch gekennzeichnet, daß das vorn angeordnete, flexible Gasabdichtelement (17) von einer Druckgasquelle (48) direkt über eine Druckregeleinrichtung (50) druckbeaufschlagt wird.

14. Schiffskörper nach Anspruch 1, dadurch gekennzeichnet, daß Seitenkörperkiele (22, 23) zum Vergrößern der Breite der druckbeaufschlagten Vertiefung unstetig divergieren.

**Revendications**

1. Coque (14) de bateau perfectionnée, qui comporte un plan central vertical et qui est partiellement supportée par une surface de sustentation par gaz pressurisé comprenant un évidement (56) situé sur un côté inférieur de la coque délimité par des coques latérales (15, 16) semblables à un catamaran, constituant une partie inférieure de la coque (14) et ayant des quilles (22, 23) qui divergent dans la sens vers l'arrière, et au moins un organe (19) formant étrave arrière situé les parois latérales (15, 16) et occupant la plus grande partie de la largeur de l'évidentment; un organe (17) flexible à l'avant formant joint étanche aux gaz, ledit évidement étant alimenté en gaz pressurisé à partir d'une source motorisée (48) d'alimentation en gaz par l'intermédiaire d'un orifice d'entrée (20, 21) de gaz en communication fluide avec ledit évidement, caractérisé par le fait que lesdites coques latérales (15, 16) s'étendent approximativement sur toute la longueur de la coque (14), lesdites quilles (22, 23) divergent de façon à agrandir la largeur de l'évidement d'au moins vingt pour cent sur l'arrière de leurs parties avant au contact de l'eau qui sont les plus proches d'une partie au contact de l'eau la plus basse dudit organe (17) formant joint flexible avant d'étanchéité, les éléments pratiquement rigides au contact de l'eau desdites coques latérales s'étendent pratiquement à partir du voisinage le plus proche des parties basses au contact de l'eau dudit organe formant joint flexible avant d'étanchéité jusqu'à un plan vertical transversal situé à l'endroit le plus proche d'une partie inférieure dudit organe (19) formant étrave arrière, au moins au nombre de un, ledit organe formant étrave arrière au moins au nombre de un est pratiquement rigide et contient au moins partiellement des surfaces obliques, lesdites surfaces obliques étant observées dans ledit plan vertical transversal, qui au total couvrent au moins vingt-cinq pour cent (25%) de la largeur de l'évidement, et lesdites obliquités desdites surfaces, lorsqu'elles sont observées dans ledit plan vertical transversal de la coque, sont comprises entre cinq (5) et cinquante (50) degrés par rapport à une ligne horizontale, ladite ligne horizontale étant définie comme une ligne perpendiculaire au plan central vertical de la coque.

2. Coque selon la revendication 1, caractérisée en ce que lesdites coques latérales (15, 16) ont des faces intérieures qui sont pratiquement parallèles l'une à l'autre au voisinage le plus proche d'au moins une partie dudit organe (17) formant joint flexible avant d'étanchéité.

3. Coque selon la revendication 1, caractérisée en ce que lesdites surfaces obliques dudit organe (19) formant étrave arrière telles qu'observées dans ledit plan vertical transversal comprennent la plus grande partie de la largeur dudit organe formant étrave arrière.

4. Coque selon la revendication 1, caractérisée en ce que lesdites surfaces obliques dudit organe (19) formant étrave arrière sont au moins en partie curvilignes.

5. Coque selon la revendication 1, caractérisée en ce que ledit organe (19) formant étrave arrière présente une forme pratiquement en V renversé.

6. Coque selon la revendication 1, caractérisée en ce que ledit organe (19) formant étrave arrière présente une forme pratiquement en V.

7. Coque selon la revendication 1, caractérisé par un organe (18) formant étrave supplémentaire disposé à la fois au voisinage le plus proche de l'évidement et à l'avant dudit organe (19) formant étrave arrière.

8. Coque selon la revendication 7, caractérisée par une communication fluide individuelle des moyens (20, 21; 51, 52) de pressurisation des gaz avec des parties individuelles de l'évidement.

9. Coque selon la revendication 1, caractérisée en ce que lesdites quilles (22, 23) des coques latérales divergent d'au moins cinquante pour cent (50%) de la distance entre elles à l'endroit de leurs parties au contact de l'eau les plus en avant.

10. Coque selon la revendication 1, caractérisé en ce que lesdites quilles (22, 23) des coques latérales sont pratiquement parallèles au voisinage le plus proche de leurs parties au contact de l'eau les plus en avant.

11. Coque selon la revendication 1, caractérisée en ce qu'un redent d'aquaplaning s'étendant vers le bas est disposé au voisinage le plus proche d'un côté évidé d'une coque latérale, lesdits redents s'étendant en outre sur seulement une partie de la longueur de l'évidement.

12. Coque selon la revendication 1, caractérisée par une structure d'étanchéité aux gaz située à l'arrière dudit organe formant étrave arrière.

13. Coque selon la revendication 1, caractérisé en ce que l'organe (17) flexible situé à l'avant formant joint étanche aux gaz est pressurisé à partir d'une source (48) de gaz pressurisé directement à travers un dispositif (50) régulateur de pression.

14. Coque selon la revendication 1, caractérisée en ce que les quilles (22, 23) des coques latérales divergent d'une manière discontinué à agrandir la largeur de l'évidement pressurisé.

*Fig. 1*

*Fig. 2*

*Fig. 3*

EP 0 149 603 B1

Fig.4

Fig.5

Fig.6

Fig.7

Fig.8

Fig.9

Fig.10

Fig.11

Fig.12